# EUROPÄISCHE PATENTANMELDUNG

(11) **EP 1 293 711 A2**
(43) Veröffentlichungstag der Anmeldung: **19.03.2003**
(21) Anmeldenummer: 02019524.4
(22) Anmeldetag: 31.08.2002
(51) Int. Cl.: F16J 15/34

(54) **Gleitringdichtung mit Kühlkanal**

(30) Priorität: 14.09.2001 DE 10145283
(71) Anmelder: Federal-Mogul Friedberg GmbH, 86316 Friedberg (DE)
(72) Erfinder: Zutz, Hans-Henning, 42929 Wermelskirchen (DE)

(57) **Zusammenfassung**

Gleitringdichtung, insbesondere Laufwerkdichtung, umfassend einen winkelförmigen Gleit- und Gegenring (1, 1'), die mit Ihren radialen Dichtschenkeln (2,2') eine Dichtfläche (3) bilden, und aus elastomerem Werkstoff bestehenden Dichtkörpem, die zwischen dem, die Gleitringdichtung aufnehmenden Gehäuse und der radial äußeren Oberfläche der axialen Schenkel des Gleit- und Gegenringes (1, 1') angeordnet sind, wobei in den axialen Schenkeln (4) des Gleit- und Gegenringes (1, 1') ein Kühlkanal (5, 5') vorgesehen ist, und dass in der inneren Umfangsoberfläche (7, 7') der axialen Schenkel (4) der Gleit- und Gegenringe (1, 1') axial verlaufende schlitzförmige Öffnungen (8, 8') vorgesehen sind, und dass die schlitzförmigen Öffnungen (8, 8') bis in den Kühlkanal (5, 5') hineinreichen.

## Beschreibung

Die Erfindung beschreibt eine Gleitringdichtung, insbesondere Laufwerkdichtung, umfassend einen winkelförmigen Gleit- und Gegenring, die mit Ihren radialen Dichtschenkeln eine Dichtfläche bilden, und aus elastomerem Werkstoff bestehenden Dichtkörpern, die zwischen dem, die Gleitringdichtung aufnehmenden Gehäuse und der radial äußeren Oberfläche der axialen Schenkel des Gleit- und Gegenringes angeordnet sind.

Laufwerkdichtungen als spezielle Ausführung von Gleitringdichtungen kommen dann zum Einsatz wenn es betriebsbedingt zu starken Verschmutzungen an den Aggregaten, Maschinen oder Anlagen kommen kann.
Die Abdichtung erfolgt dabei zwischen den Gleitflächen der radialen Schenkel des Gleit- und Gegenringes. Dabei kann, neben einer konstruktiven Auslegung, die zur Dichtheit erforderliche Flächenpressung über die Elastizität des Kunststoffes der elastomeren Dichtkörper eingestellt werden. Bei der Einstellung der auf die Anwendung bezogenen optimalen Flächenpressung auf die Gleitfläche sind unter anderem Temperatur und Relativbewegung zwischen den Gleitringpartnern entscheidende Einflußfaktoren. Nur bei genügend genauer Einstellung dieser Einflußfaktoren auf die Betriebsbedingungen kann sich der zum Betrieb der Gleitringdichtung notwendige Schmiermittelfilm zwischen den Gleitringpartnern bilden.

Eine den Merkmalen des Hauptanspruchs genügende Gleitringdichtung ist in der DE 195 46 825 C2 dargestellt. Die Gleitringdichtüng besteht aus einem Gleit- und/oder Gegenring aus einem metallischen Werkstoff, mit einer zur Aufnahme eines ringförmigen elastischen Dichtkörpers bestimmten kegeligen Umfangsfläche. Entsprechend der starken abrasiven und korrosiven Belastung im Betrieb werden verschleißbeständige Werkstoffe für die Gleitringpartner verwendet. Dies sind in erster Linie harte Gußwerkstoffe und nickelhaltigen, ledeburitisch erstarrte weiße Gußeisenlegierungen.
Ein Problem, dass vor allem bei höheren Relativgeschwindigkeiten zwischen den Gleitringpartnern auftritt ist das Fressen auf der Dichtfläche. Dieses Fressen ist in den meisten Fällen auf ein Zusammenbrechen des Schmiermittelfilms aufgrund thermischer Überlastung zurückzuführen. Eine Kühlung erfahren die hochharten Werkstoffe zumeist nur durch die wellenseitigen Schmiermittel oder je nach Einsatzfall durch die auf die radial äußere Oberfläche der Gleitringe wirkenden Medien.

Eine Gleitringdichtung die eine gezielte Kühlung der Gleitringpartner ermöglicht wird in dem amerikanischen Patent US 5, 468,002 beschrieben. Die hier beschriebene Gleitringdichtung kann über die Atmosphäre oder Flüssigkeiten gekühlt werden. Dazu verjüngt sich der Durchmesser des Gegenringes an der radial inneren Umfangsoberfläche in der Art, dass eine konische Form entsteht, durch die das Kühlmedium an die Dichtfläche geführt wird.
Das Kühlmedium erreicht zwar einseitig die Dichtfläche kann aber das Aufheizen des massiven Gleitkörpers nur bedingt vermeiden, so dass die Gefahr des Fressens bei hohen Relativgeschwindigkeiten weiterhin bestehen bleibt.

Es ist daher Aufgabe der Erfindung die oben genannten Nachteile zu überwinden und eine Gleitringdichtung zu entwickeln, die eine gezielte Kühlung der Gleitflächen ermöglicht und eine gerichtete Strömung der Schmiermittel erzeugt.

Diese Aufgabe wird erfindungsgemäß durch den kennzeichnenden Teil des Patentanspruchs 1 gelöst, vorteilhafte Weiterbildungen der Erfindung sind in den Unteransprüchen dokumentiert.

Der erfindungsgemäße Gedanke überwindet die vorgenannten technischen Nachteile dadurch, dass in den axialen Schenkeln des Gleit- und Gegenringes ein Kühlkanal vorgesehen ist, und dass in der inneren Umfangsoberfläche der axialen Schenkel der Gleit- und Gegenringe axial verlaufende schlitzförmige Öffnungen vorgesehen sind, und dass die schlitzförmigen Öffnungen bis in den Kühlkanal hineinreichen.
Die schlitzförmigen Öffnungen verlaufen axial vom Beginn, d. h. etwa in Höhe des Beginns des Kühlkanals an der Dichtfläche, zum axialen Ende der Gleit- bzw. Gegenringe, wobei das axiale Ende je nach Ausführung des Kühlkanals offen sein kann. Ist beispielsweise der Kühlkanal am axialen Ende der Gleit- bzw. Gegenringe offen, so können auch die schlitzartigen Öffnungen am axialen Ende offen sein. Die schlitzartigen Öffnungen reichen aber auf jeden Fall von der radial inneren Oberfläche bis in den Kühlkanal.
Durch die Ausbildung von lediglich kleinen Öffnungen an der Innenumfangsoberfläche der axialen Schenkel des Gleit- bzw. Gegenringes wird ein Aufschäumen der Schmiermittel verhindert, da die Innenumfangsoberfläche größtenteils unbehandelt und eben ist.

Damit eine gerichtete Strömung der Schmiermittel, die hierbei auch als Kühlmittel dienen, durch den Kühlkanal erzielt wird, wird in der Erfindung vorgeschlagen, die Längsseiten der schlitzartigen Öffnungen geneigt auszuführen. Dabei neigt sich eine Längsseite der schlitzförmigen Öffnung radial nach außen, so dass ein gerichteter Einlaß entsteht durch den das Kühlmittel in den Kühlkanal strömen kann. Die andere Längsseite der gleichen schlitzförmigen Öffnung ist radial nach innen geneigt, so dass die Form einer Schaufel entsteht. Durch die gezielte Einstellung der Neigungen der Längsseiten kann nun erfindungsgemäß der Volumenstrom an Kühlmittel durch den Kühlkanal eingestellt werden.

In einer weiteren erfindungsgemäßen Ausgestaltung der Gleitringdichtung wird vorgeschlagen, dass die Orientierung der Neigung der Längsseiten einer jeden schlitzförmigen Öffnung mit jeder folgenden Öffnung wechselt. Hierbei bleibt zu beachten, dass dies natürlich nur bei einer runden Anzahl von Öffnungen möglich ist. Auf eine nach radial außen geneigte Längsseite folgt somit eine nach radial nach außen geneigte Längsseite und auf eine nach radial innen geneigte Längsseite folgt eine nach radial nach innen geneigte Längsseite. Diese vorteilhafte Ausgestaltung der Gleitringdichtung ermöglicht es nun, dass die Förderung des Kühlmittels durch den Kühlkanal in beide Umfangsrichtungen möglich wird.

Je nach Anforderung an die Gleitringdichtung kann der Kühlkanal am axial äußeren Ende eine Öffnung besitzen. Die Öffnung kann fertigungsbedingt, d. h. wenn beispielsweise aufgrund geometrischer Abmessungen ein innenliegender Kühlkanal nicht möglich ist, oder betriebsbedingt sein, d. h. wenn beispielsweise aufgrund einer hohen Kühlwirkung ein hoher Volumenstrom durch den Kühlkanal strömen und wieder austreten muß.

Ein gerichtetes Ausströmen des Kühlmittels kann erfindungsgemäß auch dann erzielt werden, wenn sich der radiale Durchmesser der Kühlkanalinnenumfangsoberfläche, ausgehend von dem axialen Ende der Gleit- und Gegenringe vergrößert. Durch die Verjüngung des Kühlkanals zur Dichtfläche wird eine gerichtete Strömung des Kühlmittels im Kühlkanal erzeugt.

Ein weiterer Vorteil ergibt sich, wenn, wie in der Erfindung vorgeschlagen, an der inneren Umfangsoberfläche des Kühlkanals eine Anzahl von axial oder radial verlaufender Rippen angeordnet werden. Diese Rippen können die Steifigkeit der Gleitringdichtung erhöhen und einen positiven Einfluss auf das Kühlverhalten ausüben.

Erfindungsgemäße Gestaltungsbeispiele der Gleitringdichtung werden nachstehend anhand von Zeichnungen und im weiteren in der Beschreibung näher erläutert. Es zeigen:
- Figur 1: einen Schnitt durch ein erfindungsgemäßes Ausführungsbeispiel einer Gleitringdichtung mit einem offenen Kühlkanal und einer Kühlrippe,
- Figur 2: die Ansicht A auf das axiale Ende einer erfindungsgemäßen Gleitringdichtung.

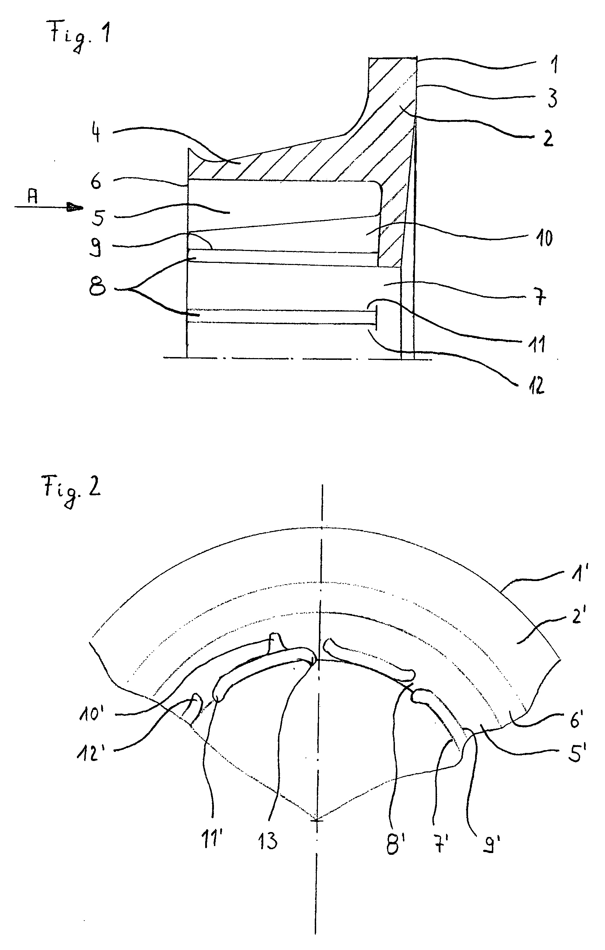

Figur 1 zeigt den Schnitt durch eine erfindungsgemäße Gleitringdichtung 1, umfassend einen radialen Schenkel 2 mit einer Gleitfläche 3 und einen axialen Schenkel 4 mit einem Kühlkanal 5. Dabei reicht der Kühlkanal 5 vom Ende 6 des axialen Schenkels 4 nahezu bis an die Gleitfläche 3. In der Innenumfangsoberfläche 7 der Gleitringdichtung 1 sind schlitzförmige Öffnungen 8 vorgesehen durch die das Schmiermittel in den Kühlkanal 5 gelangt. Dabei sind Längsseiten 11, 12 der schlitzförmigen Öffnungen radial nach innen 11 und nach außen 12 geneigt.
An der radial inneren Umfangsoberfläche 9 des Kühlkanals ist eine Rippe 10 angeordnet, die sich axial über den gesamten Kühlkanal 5 erstreckt.

In Figur 2 ist die Ansicht A auf das axiale Ende 6' einer erfindungsgemäßen Gleitringdichtung 1' dargestellt, mit dem radialen Schenkel 2' und dem axialen Schenkel 4', mit einem Kühlkanal 5'.In der Innenumfangsoberfläche 7' der Gleitringdichtung 1' sind schlitzförmige Öffnungen 8' vorgesehen, wobei die Längsseiten 11', 12' nach radial außen 12' und nach radial innen 11' geneigt sind. Dieses Ausführungsbeispiel einer erfindungsgemäßen Gleitringdichtung 1' kann eine Strömung in beide Umfangsrichtungen erzeugen, da die Neigung der Längsseiten 11', 12' mit jeder Öffnung 8' wechselt. So folgt auf eine radial nach innen geneigte Längsseite 11' eine radial nach innen geneigte Längsseite 13.
An der radial inneren Umfangsoberfläche 9' des Kühlkanals ist eine Rippe 10' angeordnet.

## Patentansprüche

1. Gleitringdichtung, insbesondere Laufwerkdichtung, umfassend einen winkelförmigen Gleit- und Gegenring (1, 1'), die mit Ihren radialen Dichtschenkeln (2, 2') eine Dichtfläche (3) bilden, und aus elastomerem Werkstoff bestehenden Dichtkörpern, die zwischen dem, die Gleitringdichtung aufnehmenden Gehäuse und der radial äußeren Oberfläche der axialen Schenkel des Gleit- und Gegenringes (1, 1') angeordnet sind, **dadurch gekennzeichnet, dass** in den axialen Schenkeln (4) des Gleit- und Gegenringes (1, 1') ein Kühlkanal (5, 5') vorgesehen ist, und dass in der inneren Umfangsoberfläche (7, 7') der axialen Schenkel (4) der Gleit- und Gegenringe (1,1') axial verlaufende schlitzförmige Öffnungen (8, 8') vorgesehen sind, und dass die schlitzförmigen Öffnungen (8, 8') bis in den Kühlkanal (5, 5') hineinreichen.

2. Gleitringdichtung nach Anspruch 1, **dadurch gekennzeichnet, dass** eine Längsseite (12, 12') der schlitzförmigen Öffnung (8, 8') radial nach außen geneigt ist und die andere Längsseite (11, 11', 13) der schlitzförmigen Öffnung (8, 8') radial nach innen geneigt ist.

3. Gleitringdichtung nach einem der Ansprüche 1 und 2, **dadurch gekennzeichnet, dass** die Neigung der Längsseiten (11, 11', 12, 12', 13) mit jeder folgenden Öffnung (8, 8') wechselt, so dass auf eine Innenneigung (11, 11', 13) eine Innenneigung (11, 11', 13) und auf eine Außenneigung (12, 12') eine Außenneigung (12, 12') folgt.

4. Gleitringdichtung nach einem der Ansprüche 1 bis 3, **dadurch gekennzeichnet, dass** der Kühlkanal (5, 5') am axial äußeren Ende (6, 6') der Gleit- und Gegenringe (1, 1') eine Öffnung besitzt.

5. Gleitringdichtung nach einem der Ansprüche 1 bis 4, **dadurch gekennzeichnet, dass** sich der radiale Durchmesser der Kühlkanalinnenumfangsoberfläche (9), ausgehend von dem axialen Ende (6, 6') der Gleit- und Gegenringe (1, 1') vergrößert, so dass der Kühlkanal (5, 5') zur Dichtfläche (3) hin verjüngt ausgebildet ist.

6. Gleitringdichtung nach einem der Ansprüche 1 bis 5, **dadurch gekennzeichnet, dass** an der inneren Umfangsoberfläche (9) des Kühlkanals (5, 5') eine Anzahl von Rippen (10, 10') angeordnet sind.
